# EUROPÄISCHE PATENTANMELDUNG

(11) **EP 1 959 416 A1**
(43) Veröffentlichungstag der Anmeldung: **20.08.2008**
(21) Anmeldenummer: 08001319.6
(22) Anmeldetag: 24.01.2008
(51) Int. Cl.: G08G 5/00

(54) **Avionisches Luftfahrtsystem mit Bodenstation zur automatischen Behebung von auftretenden Betriebsstörungen bei Flugzeugen, sowie entspechendes Verfahren**

(30) Priorität: 24.01.2007 WO PCT/EP2007/050708
(71) Anmelder: Swiss Reinsurance Company, 8022 Zurich (CH)
(72) Erfinder: Fok, Marcel, 8002 Zürich (CH); Shirai, Shinji, 8352 Räterschen (CH)
(74) Vertreter: Braun, André jr.

(57) **Zusammenfassung**

Vorgeschlagen wird avionisches Luftfahrtsystem (80) und entsprechendes Verfahren mit Bodenstation (81) zur automatischen Behebung von auftretenden Betriebsstörungen bei Flugzeugen (40/41/42). Das avlonische Luftfahrtsystem (80) ist mit einer Vielzahl von Flugzeugen (40/41 /42) über eine drahtloses Schnittstelle (402) der Avionik (403) verbunden. Falls mittels einer Sensadk (3/401/601) eine Betriebsstörung bei einem Flugzeug (40,...,42) detektiert wird, werden dedizierte Betriebsstörungseinsatzvorrichtung (603) zur automatischen Betriebsstörungsbehebung mittels eines Filtermoduls (2) selektiert und eine Schaltvorrichtung (1) der Bodenstation (81) zur Aktivierung der Betriebsstörungseinsatzvorrichtung (603) spezifisch freigeschaltet.

## Beschreibung

Die Erfindung betrifft ein avionisches Luftfahrtsystem mit Bodenstation zur automatischen Behebung von auftretenden Betriebsstörungen bei Flugzeugen. Das avionische Luftfahrtsystem ist mit einer Vielzahl von Flugzeugen über eine drahtloses Schnittstelle der Avionik verbunden. Mittels einer Schaltvorrichtung der Bodenstation des Luftfahrtsystems werden dedizierte Betriebsstörungseinsatzvorrichtung zur automatischen Betriebsstörungsbehebung aktiviert, falls eine mittels einer Sensorik detektierte Betriebsstörung bei einem Flugzeug eintritt.

### Stand der Technik

In den letzten zwanzig Jahren ist die Menge an mit Flugzeugen transportierter Güter und Personen weltweit explodiert. Die Abhängigkeiten der Industrie und Wirtschaft vom Flugverkehr sind dabei vielfältig. Wie bei jeder technischer Vorrichtung ereignen sich jedoch auch bei Flugzeuge immer wieder Betriebsstörungen. Die Ursachen dafür sind unterschiedlich und riechen von Materialabnutzung, Materialermüdung, mangelhafter Wartung der Flugzeuge oder der Landebasen, fehlerhaftem Verhalten von Piloten, Lotsen, bis zu falschen oder ungenügenden Wettereinschätzungen. Doch auch bei sorgfältiger Ausbildung der Piloten, ausgezeichneter Wartung der Luftfahrzeuge und sorgfältiger Flugvorbereitung können Betriebsstörungen nicht ausgeschlossen werden, was intrinsisch in der Komplexität der beteiligten Systemen liegt. Die Ursachen und Hintergründe von Flugunfällen und Betriebsstörungen sind nicht immer einfach zu klären. Die stark steigenden Ausmasse des Flugverkehrs in den letzten Jahren verlangt zusätzlich eine Automatisierung auf allen Ebenen. Automatisierungen ohne menschliche Interaktion war jedoch im Stand der Technik gerade bei Betriebsstörungsbehebung bis heute nicht möglich. Betriebsunterbrüche bei Flugzeugen unterliegen, trotz der grossen Anzahl mit Flugzeugen transportierter Güter und Personen, nicht den Gesetzmässigkeiten grosser Zahlen. Einerseits führt die technische Komplexität im Aufbau der Flugzeuge mit meist mehreren Motoren und einigen tausend interagierenden Sensoren und Betriebseinheiten zu einem für den Fachmann in Extremfällen nicht voraussagbarem Verhalten. Anderseits ist auch die Physik z.B. der Flügel und deren Dynamik sowie des Flugzeugrumpfes keineswegs technisch so verstanden, dass die entworfenen Flugzeuge ein für alle Fälle voraussagbares Verhallten im Flug zeigen. Im Gegenteil beruht das meiste der Gestaltungstechnik der Flügel und des Flugzeugktirpers noch Immer auf empirischen Erfahrungswerten und nicht technisch vorausgesagten Formen. Flugzeuge selbst sind zudem im Verhalten bei Betrieb stark Wetter abhängig, Das Wetter selbst ist technisch zur Zeit für grössere Zeiträume weder wirklich voraussagbar noch berechenbar, sondern unterlieg chaotischen, hochgradig nichtlinearen Prozessen, die sich nicht für beliebig grosse Zeiträume extrapolieren lassen. Dadurch entzieht sich eine effiziente und stabile Automatisierung der Behebung von Betriebsstörungen den im Stand der Technik bekannten avionischen Luftfahrtsystemen. Wie erwähnt hat die starke Zunahme des Flugverkehrs In den letzten Jahren ein Bedürfnis nach neuen Luftfahrtsystemen geschaffen, welche Betriebsstörungen effizient beheben und wirksam abfangen können. Einerseits sollen Betriebsstörungen präventiv verhindert anderseits ihr Eintreten rechtzeitig detektiert und behoben werden, möglichst bevor es zu einer Katasrophe kommt. Eine effiziente Betriebsstörungsbehebung mittels eines Luftfahrtsystem hilft natürlich auch die wirtschaftlichen Folgen für den Betreiber zu minimieren, was ihm Vorteile insbesondere Im Wettbewerb mit anderen Betreibern verschaft. Bei der Behebung der Betriebsstörung kann nicht nur die Art der Einsatzvonichtungen zur Störungsbehebung (z.B. Betriebsstörungseinsatzvorrichtungen wie automatische Löschsysteme, Schliess- und Regelwerke, Alarm- und Signalvorrichtungen, Schalt- und Aktivierungsvorrichtungen oder Katastropheneinsatzvorrichtungen etc.) eine Rolle spielen, sondern auch die Art, wie gemessenen Kontrollparameter gefiltert, verarbeitet und zur Steuerung der Einsatzmittel technisch umgesetzt werden. Häufig ist es insbesondere bei der Real-Time Erfassung, Analyse und Verwaltung der Messparameter solcher Systeme die technische Umsetzung, die kaum zu überwindbare Probleme bereitet. Die heute in jedem Zeitpunkt verfügbare, ungeheure Datenmenge aus unterschiedlichsten Erfassungsvorrichtungen und Detektionsvorrichtungen (z.B. Windgeschwindigkeitssensoren, Satellitenbilder, Wasserstandsensoren, Wasser- und Windtemperatursensoren etc.) macht eine Kontrolle und Lenkung durch reines menschliches Handeln und Wahrnehmung nur noch schwer möglich. Die technische Umsetzung solcher Luftfahrtsysteme sollte deshalb, falls möglich, vollautomatisiert und In Real-Time sowohl mit den Erfassungsvorrichtungen, als auch mit den Betriebsstörungseinsatzvorrichtungen interagieren. Selbst nur teilweise menschliche Interaktionen ist in der Flugtechnik in vielen Fällen betreffend Signalmenge und/oder Reaktionsgeschwindigkeit nicht mehr möglich. Die menschliche Interaktion hat bei komplexen Systemen zudem den Nachteil, dass ihre Fehleranfälligkeit in Abhängigkeit der Komplexität nicht linear steigt. Das Verhalten bzw. der Betrieb des Systems wird unvorhersagbar. Unerwarteten Betriebsunterbrüche, Systemabstürze oder Systemcrashes sind die Folge. Dazu gibt es gehäuft Beispiele in neuerer Zeit, wie z.B. systemerzeugte Betriebsunterbrüche bei mit menschlicher Interaktion gekoppelten Systemen. So beispielsweise trotz allen Notfallinterventionsvomchtungen und -systemen unvorhersehbare Flugzeugabstürze wie z.B. MD 11-Crash der Swissair vor Halifax am 03.11.98 oder das Flugunglück bei Überlingen im Juli 2002 etc.

Obwohl Betriebsstörungen bei Flugzeugen, sowohl in der Personenflugbeförderung als auch bei der Güterbeförderung, durch die steigende beförderte Menge ebenfalls häufiger geworden sind, gilt für Flugzeugbetriebsstörungen Immer noch, dass der Stand der Technik über viel weniger Erfahrungswerte verfügt, als bei Betriebsstörungen in anderen technischen Bereichen. Dies betrift z.B. die Anzahl existierender, in Betrieb stehenden Einheiten mit vergleichbaren historischen Ereignissen. Daraus folgt, dass zur Realisierung eines Luftfahrtsystems zur Behebung von Betriebsstörungen, statistische Erfahrungswerte, wie z.B. das "Gesetz der grossen Zahlen" im Wesentlichen nicht anwendbar sind. Dazu kommt, dass es in vielen Fällen von Betriebsstörungen bei Flugzeugen zudem schwierig ist, die wirkliche Ursache festzustellen, trotz aufwendigen technischer Hilfsvorrichtungen, wie die Black Box und nahtloser Überwachung der Flugtrajektorie. Dies macht es schwierig automatisierte Einsatzvorrichtungen zur Behebung von Betriebsstörungen oder entsprechende eletronische Schalt- und Signalerzeugungssysteme auf die notwendige Kausalität zu gründen, bzw. entsprechende Daten überhaupt zu erhalten. Im Stand der Technik versucht man z.B. entsprechende Daten auf die betroffenen Landebasen, Typen der eingesetzte Flugzeuge oder die Menge betriebener Flugzeuge (z.B. mittels Marktanteilen des Betrelbers, wie z.B. Umlauf (Tumover), etc.) zu begründen. Bekannte solche Systeme sind z.B. RPK (Revenue Passenger Kilometer), AVF (Average Fleet Value) etc. Damit kann z.B. das Verhalten des Betreibers berücksichtig werden. Einer der Nachteile dieser Systeme ist, dass der Tumover nur die momentane und unmittelbar folgende Zukunft reflektieren und technisch nur sehr indirekt Aufschlüsselung der Ursachen von Betriebsstörungen erlaubt. Zudem besteht technisch zwischen dem Tumover und den auftretenden Betriebsstörungen In den seltensten Fällen eine direkte Abhängigkeit. Einige Systeme des Standes der Technik basieren auch auf der Anzahl in Betrieb stehender Flugzeuge, welche als Randparameter Art und technischen Möglichkeiten zur Realisierung eines automatisierten Augfahrtssystems zur Behebung von Betriebsstörungen genommen wird. Diese Systeme reflektieren unter Umständen das Auftreten von Betriebsstörungen besser. Jedoch müssen nicht alle Betreiber von Flugzeugen gleiche technische Ausrüstungen, technisches Know How, Wartung der Maschinen, Flugbasen etc. benutzen, geschweige denn für alle betriebenen Flugzeuge gleich verwenden. Dies verzehrt die Abhängigkeit stark, wodurch die Realisierung solcher Systeme ihrerseits Unsicherheiten erhält und eine grosse Fehlertoleranz benötigt. Andere Luftfahrtssysteme des Standes der Technik basiert in ihrer technischen Unsetzung auf dem sog. Burning Rate Verfahren. Eine der Probleme des Burning Rate Verfahrens beruht auf der Schwierigkeit, Betriebsstörungen und deren Erwartungswerte auf zukünftige Betriebsstörungen zu extrapolieren. Dies liegt u.a. in der Komplexität und Nichtlinearität der äusseren Einflüsse auf den Betrieb der Flugzeuge.

Bei den Luftfahrtsystemen des Standes der Technik ist zur differenzierten Signalerzeugung menschliche Interaktion in vielen Bereichen immer noch notwendige Voraussetzung. Besonders bei Betriebsstörungen ist die Komplexität der beteiligten Vorrichtungen, erfassten Messparametem oder zu kontrollierenden Prozessen und Interaktionen mit der Umwelt In einem Mass überschritten, das menschliche Interaktion immer weniger zulässt. Insbesondere bei der Steuerung, Kontrolle und Überwachung der dynamlschen und/oder nicht-linearen Prozesse, welche zu den Betriebsstörungen führen, entzeiht sich eine Automatisierung der Erkennung dem Stand der Technik. Häufig ist es insbesondere die Nichtlinearität, welche konventionellen Vorrichtungen den Boden zur Automatisierung entzieht. Viele technische Umsetzungen unterschiedlichster Arten von Frühwarn-Vorrichtungen, Bild- und/oder Mustererkennungsvorrichtungen (Pattem-Recognition), insbesondere bei analogen Meßdaten oder bei notwendiger Selbstorganisierung der Vorrichtung, sind Im Stand der Technik noch heute nicht befriedigend gelöst sind. Die meisten natürlichen Prozesse besitzen mindestens teilweise einen nichtlinearen Verlauf und tendieren ausserhalb eines schmalen linearen Gleichgewichtbereichs zu exponentiellem Verhalten. Eine effiziente und zuverlässig funktionierende Frühwarnsignalerzeugung und automatisierte Betriebsstörungsbehebung kann für Flugzeuge deshalb überlebenswichtig sein. Effiziente Betriebsstörungsbehebung umfasst komplexe technischen Teilvorrichtungen der Flugzeuge ebenso wie die vielen tausend Sensoren und Meßsignalen, oder Überwachungs- und Steuersystemen basierend auf schwer kontrollierbaren Umwelteinflüssen, wie meteorlogischen (Stürme, Hurrikans, Überschwemmungen, Termiken) Einflüssen. Eine Automatisierung der Störungsbehebung sollte alle dies Einflüsse berücksichtigen können, ohne die Reaktionsgeschwindigkeit der Störungsbeseitigung zu beeinträchtigen. Solche Systeme sind im Stand der Technik bis anhin nicht bekannt. Die internationale Patentschrift WO 2004/045106 (EP1563616) zeigt ein System des Standes der Technik, womit Betriebsdaten eines Flugzeuges gesammelt und über Kommunikationsmittel des Bordsystems an eine Bodenstation übermittelt werden können. Die europäische Patentschrift EP 1 455 313 zeigt ein anderes System des Standes der Technik, wobei Flug- und Betriebsparameter mit einem sog. Aircraft Condition Analysis and Management System (ACAMS) überwacht und anfallende oder zu erwartende Betriebsstörungen detektiert werden können. Die europäische Patentschrift EP 1 630 763 A1 zeigt ein weiteres Überwachungs- und Kontrollsystem. Mit diesem System sollen anfallende Betriebsstörungen basierend auf den übermittelten Messparametem vermieden werden. Die dabei gezeigte Alarmvorrichtung basiert insbesondere auf mittels des Systems generierten, prognostizierten Trajektorien de überwachten Flugzeuge. Bei bevorstehenden Betriebsstörungen wird automatisch ein entsprechendes Alarmsignal erzeugt. Die US Patentschrift US 6 940 426 zeigt ein System zur Wahrscheinlichkeitsbestimmung von auftretenden Betriebsstörungen bei Flugzeugen. Dabei werden unterschiedliche Messparameter sowohl von historischen Ereignissen als auch von dynamisch erfassten Ereignissen erfasst und entsprechend bei der Signalerzeugung berücksichtigt. Die europäische Patentschrift EP 1 777 674 zeigt ein Kontroll- und Steuersystem für Landungen und Starts von Flugzeugen. Die Messparameter können gleichzeitig von mehreren zugeordneten Flugzeugen erfasst, verwaltet und zur Kontrollsignalerzeugung verwendet werden. Die europäische Patentschrift EP 1 840 755 A2 zeigt ein weiteres Luftfahrtsystem zur Vermeidung und Behebung von Betriebsstörungen. Dabei werden eine Vielzahl von Messparametem des Flugzeuges an eine Bodenstation übermittelt. Diese Vergleicht die Messdaten z.B. mit Herstellerdaten in Real-Time und erzeugt bei Abweichung ein entsprechendes Steuersignal und/oder Steuersoftware für die Avionik des Flugzeuges oder den Betreiber. Die US Patentschrift US 5 500 797 zeigt ein Kontrollsystem, welches Betriebsstörungen Im Flugzeug detektiert und Messparameter spelchert. Die gespeicherten Messparameter können bei der Analyse der Betriebsstörung verwendet werden. Insbesondere werden damit Messdaten für zukünftige Betriebsstörungen erfasst und können zur Steuerung von Betriebsstörungseinsatzvorrichtungen verwendet werden. Schlussendlich zeigt die europäische Patentschrift EP 1 527 432 B1 ein avionisches Luftfahrtsystem zur ortsgebundenen Flugüberwachung von Flugzeugen. Basierend auf den übermittelten Daten kann z.B. eine entsprechendes Alarmsignal automatisch erzeugt und Kontroll- und Steuerfunktionen generiert werden.

### Technische Aufgabe

Es ist eine Aufgabe dieser Erfindung, ein avionisches Luftfahrtsystem mit Bodenstation zur automatischen Behebung von auftretenden Betriebsstörungen bei Flugzeugen vorzuschlagen, welche die oben erwähnten Nachteile nicht aufweisen. Insbesondere soll die Lösung es erlauben, ein vollautomatisiertes, elektronisches Luftfahrtsystem zur Verfügung zu stellen, welches dynamisch auf veränderte Bedingungen und Betriebsunterbrüche reagiert und/oder sich anpasst. Weiter soll es eine Lösung sein, welche erlaubt, das avionische Luftfahrtsystem derart zu gestalten, dass veränderbare Kausalität und Abhängigkeit der Betriebsstörungen (z.B. Ort des Einsatzes, Art des Einsatzes, Betrieb des Flugzeuges, äussere Einflüsse wie z.B. Wetter, Landebasis etc.) mit der notwendigen Genauigkeit vom Luftfahrtsystem berücksichtigt und in der technischen Umsetzung derart integriert sind, das menschliches Interagieren nicht notwendig ist.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen, der Beschreibung und den Zeichnungen hervor.

insbesondere werden diese Ziele durch die Erfindung dadurch erreicht, dass das avionische Luftfahrtsystem mit Bodenstation zur automatischen Behebung von auftretenden Betriebsstörungen bei Flugzeugen mit einer Vielzahl von Flugzeugen über eine drahtloses Schnittstelle der Avionik der Flugzeuge verbunden ist, wobei dedizierte Betriebsstörungseinsatzvomchtung zur automatischen eetriebsstörungsbehebung mittels einer Schaltvorrichtung der Bodenstation aktiviert werden, falls eine mittels einer Sensorik detektierte Betriebsstörung eintritt, dass das Luftfahrtsystem in die Avionik der Flugzeuge integrierte Detektionsvorrichtungen zum elektronischen Erfassen durchgeführter Start- und/oder Landeeinheiten der Flugzeuge umfasst, wobei für Start und Landung einem Flugzeug zugeordnete Logparameter der durchgeführten Start- und/oder Landeeinheiten von den Detektionsvorrichtungen über die drahtlose Schnittstelle auf die Bodenstation übertragen wird, dass die Bodenstation für jedes Flugzeug ein inkrementierbarer Techlog-Stapelspeicher mit auslesbarem Stapelspeicherhöhenwert umfasst, wobei der Techlog-Stapelspelcherhöhenwert mittels eines Zählermoduls basierend auf gefilterten Start- und/oder Landeeinheiten der übertragenen Logparameter des jewelligen Flugzeuges nach Übertragung der Parameter erhöht wird, dass das Zählermoduls Mittel zum Auslesen des Techlog-Stapelspeicherhöhenwertes und die Bodenstation ein Filtermodul umfasst, mittels welchem Filtermodul dynamisch für ein bestimmtes Zeitfenster ein Speicherschweliwert zur Freigabe der Aktivierung der Betriebsstörungseinsatzvorrichtung basierend auf dem Techlog-Stapelspeicherhöhenwerte bestimmt wird, dass die Bodenstation ein Aktivierungsstapelspeicher eines geschützten Speichermodul zum Erfassen von Aktivierungsparameter des Flugzeuges umfasst, wobei die Aktivierungsparameter basierend auf dem aktuellen Speicherschwellwert auf die Bodenstation übertragen werden und der Aktivierungsstapelspeicher entsprechend den übertragenen Aktivierungsparameter schrittweise inkrementiert wird, und dass mittels eines Zählermoduls der Bodenstation einen Aktivierungsstapelspeicherhöhenwert des Aktivierungsstapelspeichers kumuliert erfasst wird und, falls der dynamisch bestimmte Speicherschwellwert mit dem Aktivierungsstapelspelcherhöhenwert erreicht wird, mittels des Filtermoduls die Schaltvorrichtung zum dedizierten Aktivieren von Betriebsstörungseinsatzmittel bei auftretenden Betriebsstörungen freigeschaltet wird. Die zugeordneten Logparameter können z.B. mittels der drahtlosen Schnittstelle der Avionik der Flugzeuge über ein sattelltenbasiertes Netzwerk direkt auf die Bodenstation übertragen werden. Die zugeordneten Logparameter können z.B. aber auch mittels der drahtlosen Schnittstelle der Avionik (Bordsystems) der Flugzeuge über ein drahltoses Kommunikationsnetzwerk einer angeflogenen Landebasis auf die Bodenstation übertragen werden. Die Detektionsvorrichtungen können z.B. vollständig in die Avionik der Flugzeuge integriert sein. Die Landebasen können z.B. aber auch mindestens Teile der Detektionsvorrichtung umfassen. Die Detektionsvorrichtung kann z.B. mindestens teilweise als Bestandteil eines Kontrollsystems einer Landebasis, z.B. eines Flughafens oder Flugplatzes, realisiert sein. Die Detektionsvorrichtung kann z.B. auch teilweise als Bestandteil eines Kontrollsystems eines Flugdienstleistungsanbieter und/oder Flugbetriebsanbieter realisiert sein. Diese hat den Vorteil, dass bei der Avionik der Flugzeuge keine weiteren technischen Anpassungen oder Realisationen notwendig sind, als bereits vorhanden. So können z.B. die Detektionsvorrichtung an jeder möglichen Flug-/Landebasis realisiert sein oder die Cycles können anderweitig erfasst werden und an das Luftfahrtsystem übermittelt werden. Die Erfindung hat u. a. den Vorteil, dass mittels der erfindungsgemässen Vorrichtung ein einheitliches, technisch in die bestehende Elektronik der Flugzeuge (Avionik) zu integrierendes vollautomatisiertes avionisches Luftfahrtsystem mit Bodenstation zur automatischen Behebung von auftretenden Betriebsstörungen bei Flugzeugen realisiert werden kann. Dies war so Im Stand der Technik bis anhin nicht möglich, da die Automatisierungen ohne menschliche Interaktion häufig unvorsehbare Instabilitäten aufwiesen. Betriebsunterbrüche bei Flugzeugen unterliegen trotz der grossen Anzahl mit Flugzeugen transportierter Güter und Personen nicht den Gesetzmässigkeiten grosser Zahlen. Einerseits führt die technische Komplexität Im Aufbau der Flugzeuge mit meist mehreren Motoren und einigen tausend interagierenden Sensoren zu einem für den Fachmann in Extremfällen nicht voraussagbaren Verhalten. Anderseits ist auch die Physik z.B. der Flügeldynamik keineswegs technisch so vollständig verstanden, dass Flugzeuge in allen Fällen ein voraussagbares Verhallten Im Flug zeigen. Im Gegenteil beruht das meiste der Gestaltungstechnik der Flügel und des Flugzeugkörpers noch immer auf empirisch gesammelten Erfahrungswerten und nicht technisch vorausgesagten oder berechneten Formen. Flugzeuge selbst sind zusätzlich in ihrem Betrieb stark Wetter abhängig. Das Wetter selbst Ist technisch zur Zelt weder wirklich voraussagbar noch berechenbar, sondern unterlieg chaotischen, hochgradig nichtlinearen Prozessen. Dadurch entzog sich eine effiziente und stabile Automatisierung der Behebung von Betriebsstörungen den im Stand der Technik bekannten avionischen Luftfahrtsystemen. Das erfindungsgemässe Luftfahrtsystem mit Bodenstation behebt nun diesen Mangel Im Stand der Technik und ermöglicht erstmals die Realisierung eines entsprechenden, automatisierten avionischen Luftfahrtsystems. Ein weiterer Vorteil ist, dass mittels des erfindungsgemässen Luftfahrtsystems mindestens teilweise basierend auf Cycles (take off and landing) Kausalität und Abhängigkeit der Betriebsstörungen mit der notwendigen Genauigkeit erfasst und verwendet werden können. Damit lässt sich eine dynamisch angepasste Betriebssicherstellung mittels automatisierter Betriebsstörungsbehebung garantieren. Im Sonderfall von Ausführungsbeispielen mit zusätzlich geldwertbasierten Parametern, erlaubt das Luftfahrtsystem erstmals eine vollständige Automatisierung der zusätzlichen Tariflerung der Betriebsstörung auf allen Stufen. Auch dies war so bis anhin im Stand der Technik so nicht möglich. Wie erwähnt sind die Aktivierungsparameter variabel mittels des Filtermoduls basierend auf den detektierten Anzahl Start- und/oder Landeeinheiten bestimmt. Ebenso kann es sinnvoll sein z.B. mittels Messsensoren der Detektionsvorrichtung die Start- und/oder Landeeinheiten dynamisch oder teilweise dynamisch zu detektieren. Die Bodenstation wird damit dynamisch über die durchgeführten Starts und Landungen eines Flugzeuges signalisiert, Als Ausführungsvariante können z.B. auch mittels Sensoren und/oder Detektionsmittel der Detektionsvorrichtung landbasisspezifischen Daten der zugeordneten Lande-/Startbasis für Flugzeuge, wie z.B. Fluggütertransportmittel und/oder Personenflugbeförderungsmittel, dynamisch detektiert werden. Die dem Luftfahrtsystem zugeordneten Flugzeuge besitzen Detektionsvorrichtungen mit einer Schnittstelle zur Bodenstation und/oder Landebasis und/oder satellistenbaslereten Netzwerk. Die Schnittstelle zur Bodenstation kann z.B. mittels einer Luftschnittstelle realisiert sein. Diese Ausführungsvariante hat u. a. den Vorteil, dass das Luftfahrtsystem eine real-time Erfassung der Cycles (Start-/Landung) erlaubt. Daraus ergibt sich auch die Möglichkeit zu einer dynamischen Adaption des Betriebs des Luftfahrtsystems In Real-Time an die aktuellen Verhältnisse und/oder Insbesondere eine entsprechende real-time Anpassung der Aktivierungsparameter. Die technische Umsetzung der Verfahrens erhält damit die Möglichkeit zur Self-Adapting des Luftfahrtsystems. Ebenfalls erlaubt dies eine vollständige Automatisierung. Diese Art von Automatisierung Ist mit keinem der Vorrichtungen des Standes der Technik möglich.

In einer Ausführungsvariante werden die Betriebsstörungseinsatzmittel mittels des Filtermoduls bei Detektierten einer Betriebsstörung mittels der Sensorik des Luftfahrtsystems entsprechend der aufgetretenen Betriebsstörung und/oder dem betroffenen Flugzeugtyp selektiert und mittels der Schaltvorrichtung aktiviert. Diese Ausführungsvariante hat den Vorteil, dass sich zur Behebung der anfallenden Betriebsstörung mittels des Filtermoduls die aktivierten Betriebsstörungseinsatzmittel spezifisch selektiert und an die anfallende Betriebsstörung und/oder Ort der Betriebsstörung angepasst werden können. Z.B. kann das Filtermodul für diese Ausführungsvariante entsprechend realisierte Expertensysteme, neuronale Netzwerkmodule umfassen. Insbesondere kann das Filtern und Selektieren z.B. mittels adaptierter Lookup Tables realisiert sein. Dies erlaubt eine Automatisierung der Luftfahrtsysteme basierend auf dem erfindungsgemässen System, wie es bis anhin im Stand der Technik nicht annähernd möglich war.

In einer anderen Ausführungsvariante werden bei Detektieren einer Betriebsstörung mittels der Sensorik die Betriebsstörungseinsatzmittel mittels des Filtermoduls zusätzlich basierend auf dem Aktivierungsstapelspeicherhöhenwert selektierbar und mittels der Schaltvorrichtung selektiv aktiviert. Diese Ausführungsvariante hat u.a. den Vorteil, dass das Luftfahrtsystem dynamisch auf die übermittelten Aktivierungsparameter reagieren kann. Der Speicherschwellwert und die kumulierten Aktivierungsparameter müssen so nicht notwendigerweise identisch sein. Dies erlaubt z.B. mittels des Filtermoduls einen dynamische Anpassung der Selektierten Betriebsstörungseinsatzvorrichtungen basierend auf den übermittelten Aktivierungsparametern.

In einer weiteren Ausführungsvariante umfassen die Logparameter zusätzlich Messwertparameter des Flight Management System (FMS) und/oder des Inertialnavigationsvorrichtung (INS) und/oder der Fly-By-Wire Sensoren und/oder Flugüberwachungsvorrichtungen des Flugzeuges, wobei der Speicherschwellwert mittels des Filtermoduls dynamisch für das jeweilige Zeitfenster basierend auf dem Techlog-Stapelspeicherhöhenwert und den zusätzlichen Logparameter generiert wird. Diese Ausführungsvariante hat u.a. den Vorteil dass z.B. das Luftfahrtsystem dynamisch und in Real-Time mittels der zusätzlichen Logparametern angepasst werden kann. Ebenso können z.B. mittels des Filtermoduls die Aktivierungsparameter und/oder der Speicherschwellwert dynamisch mittels der zusätzlichen Logparametern an die Art und Wahrscheinlichkeiten einer Betriebsstörung angepasst werden.

In einer wieder anderen Ausführungsvariante umfasst die Avionik des Flugzeuges eine Höhenmesssensorik und/oder einen Fahrtenmesser und/oder einen Variometer und/oder einen Horizontkreisel und/oder einen Wendezeiger und/oder einen Beschleunigungsmesser und/oder eine Überziehwamsensorik und/oder eine Aussentemperatursensorik und/oder eine Ortsbestimmungsvorrichtung umfasst, wobei die Logparameter zusätzlich Messparameter mindestens eines der Sensoren umfassen und wobei der Speicherschwellwert mittels des Filtermoduls dynamisch für das jeweilige Zeitfenster basierend auf dem Techlog-Stapelspeicherhöhenwert und den zusätzlichen Logparameter generiert wird. Beispielsweise kann mittels eines GPS-Modul des Ortsbestimmungsmoduls der Detektionsvorrichtung ortsabhängige Parametern generiert und an die Bodenstation übermittelt werden. Diese Ausführungsvariante hat u. a. die gleichen Vorteile, wie die vorgehende. Bei der Ausführungsvariante mit Ortsbestimmungsmodul können z.B. mittels dem Luftfahrtsystem jederzeit die Betriebsstörungseinsatzvorrichtung bezüglich des Ortes des Betriebsstörungsereignisses kontrolliert und gesteuert werden. Wie erwähnt können folglich mittels des Ortserfassungsmodul der Detektionsvorrichtung z.B. Ortskoordinatenparameter des aktuellen Standortes des Flugzeuges generiert werden und an die Bodenstation zum Auslösen der Intervention zur Behebung einer Betriebsstörung mittels der dediziert selektierten Betriebsstörungselnsatzvorrichtungen übertragen werden. Beispielsweise kann mittels mindestens einer Betriebsstörungseinsatzvorrichtung beim Detektieren eines Interventionsereignis die Betriebsstörung des Flugzeuges automatisiert oder mindestens halb automatisiert behoben werden. Diese Ausführungsvariante hat u. a. den Vorteil, dass die Betriebsstörungseinsatzvorrichtungen, wie z.B. automatisierte Löschvorrichtungen, Alarmvorrichtungen bei Hilfsmittel oder Interventionseinheiten, wie z.B. Polizei- oder Feuerwehrelnsatzeinheiten, automatisierte Schliess- oder Ab-/Umschalteinheiten etc. automatisiert und/oder in Real-Time basierend auf dem aktuellen Standort des Flugmittels optimiert und/oder aktiviert werden können. Die Betriebsstörungseinsatzvorrichtung kann neben automatisierten Vorrichtungen zum direkten eingreifen auch zusätzlich geldwertbasierte Übertragungsmodule umfassen. Da mittels des Ortserfassungsmodul der Detektionsvorrichtung z.B. Ortskoordinatenparameter des aktuellen Standortes des Flugzeuges generiert werden und an die Bodenstation übermittelt werden können, können z.B. mittels des Filtermoduls die Aktivierungsparameter und/oder der Speicherschwellwert dynamisch an die Wahrscheinlichkeiten des Auftretens einer Betriebsstörung angepasst werden. Z.B. können schwierige Landebasen, wie z.B. Honkong höheren Aktivierungsparameter oder Speicherschwellwerten zugeordnet werden, während Landebasen mit hoher Sicherheit, wie z.B. Frankfurt oder Zürich, kleineren Werten bei den Aktivierungsparameter und/oder des Speicherschwellwertes. Das Verhalten und die Umwelteinflüsse werden so beim Betrieb des Flugzeuges vollständig und dynamisch berücksichtigt. Dies war so im Stand der Technik bis anhin nicht möglich. Das gleich gilt für erfasste Messparameter der Höhenmesssensorik, des Fahrtenmesser, des Variometer, des Horizontkreisel, des Wendezeiger, des Beschleunigungsmesser, des Überziehwarnsensorik oder der Aussentemperatursensorik des Flugzeuges.

In einer Ausführungsvariante werden mittels der Avionik des Flugzeuges oder den Kommunikationsmittel der Landebasis ATIS-Messparameter basierend auf dem . Automatic Terminal Information Service (ATIS) der angeflogenen Landebasis bei jeder Lande- und Starteinheit automatisch auf die Bodenstation übertragen, wobei der Speicherschwellwert dynamisch für das jeweilige Zeitfenster basierend auf dem Techlog-Stapelspeicherhöhenwert bestimmt und mittels der ATIS-Messparameter dynamisch angepasst wird. Diese Ausführungsvariante hat u.a. die gleichen Vorteile wie die vorhergehende. Insbesondere kann z.B. das Luftfahrtsystem dynamisch und in Real-Time basierend auf den ATIS-Messparameter angepasst werden. Ebenso können z.B. mittels des Filtermoduls die Aktivierungsparameter und/oder der Speicherschwellwert dynamisch mittels der ATIS-Messparameter an die Art und Wahrscheinlichkeiten einer Betriebsstörung angepasst werden.

In einer anderen Ausführungsvariante werden mittels des Filtermoduls der Bodenstation dynamisch bestimmte erste Aktivierungsparameter auf die Avionik des Flugzeuges und/oder auf ein dem jeweiligen Flugzeuge zugeordneten Ergänzungsbordsystem übertragen, und zur inkrementierung des Aktivierungsstapelspeichers geschützte zweite Aktivierungsparameter von der Avionik oder dem zugeordneten Ergänzungsbordsystem generiert und auf die Bodenstation übertragen. Die geschützten zweiten Aktivierungsparameter können z.B. eine eindeutig zuordenbare Identifikationsnummer oder andere elektronisch identifikation (ID), wie z.B. eine IMSI umfassen. Diese Ausführungsvariante hat u.a. den Vorteil, dass die zweiten Aktivierungsparameter und die ersten Aktivierungsparameter nicht identisch sein müssen. Dies erlaubt z.B. einen dynamische Anpassung der Selektierten Betriebsstörungseinsatzvorrichtungen basierend auf den zweiten Aktivierungsparametem mittels des Filtermoduls. Durch das geschützte Beifügen einer eindeutig zuordenbaren Identifikationsnummer, lassen sich die Aktivierungsparameter insbesondere z.B. auch einfach über Netzwerke übermitteln oder von dezentralisierten Systemen bearbeiten.

In einer weiteren Ausführungsvariante umfasst die Bodenstation ein Interface zum Zugreifen auf eine oder mehrere Datenbanken mit landebasisspezifischen Datenrekords, wobei jede mittels der Detektionsvorrichtung detektierte und als Logparameter erfasste Start- und/oder Landeeinheit mindestens einem landebasisspezifischen Datenrekord zugeordnet wird und die Logparameter mittels eines Gewichtungsmodul basierend auf dem zugeordneten landebasisspezifischen Datenrekord gewichtet werden und/oder gewichtet generiert werden. Das Luftfahrtsystem kann z.B. zusätzlich Mittel zum dynamischen Aktualisieren der einen oder mehreren Datenbanken mit landebasisspezifischen Datenrekorde umfassen, wobei die Aktualisierung der landebasisspezifischen Datenrekorde periodisch und/oder auf Request realisiert sein kann. Die eine oder mehrere Datenbanken können z.B. dezentralisiert einer Landebasis für Flugzeuge zugeordnet sein, wobei mittels eines Interfaces Daten unidirektional und/oder bidirektional zur Bodenstation übertragen werden. Diese Ausführungsvariante hat u. a. die gleichen Vorteile wie die vorhergehende Ausführungsvariante. Insbesondere wird durch das Zugreifen auf die Datenbanken mit lande- und/oder starteinheitsspezifischen Datenrekords eine real-time Adaption des Luftfahrtsystem z.B. betreffend den technischen Bedingungen bei den benutzten Landebasen möglich. Dies erlaubt das Luftfahrtsystem stets automatisiert auf dem neusten Stand zu halten. Dies kann insbesondere wichtig sein beim Berücksichtigen neuer Entwicklungen und Einführungen von technischen Systemen zur Sicherheitserhöhung etc. bei den Cycles. Weiter hat die Realisierung der Datenbanken den Vorteil, dass mittels Filtermodul oder geeigneter dezentralisierter Filtermittel, Daten, wie z.B. Metadaten von erfassten Daten generiert werden können und dynamisch aktualisiert werden können. Dies erlaubt einen schnellen und einfachen Zugriff. Bei einer lokalen Datenbank bei der Bodenstation mit periodischer Aktualisierung kann z.B. das Luftfahrtsystem auch dann dynamisch weiter funktionieren, wenn die Verbindungen zwischenzeitlich zu einzelnen Landebasen unterbrochen wird.

In einer wieder anderen Ausführungsvariante wird mittels eines integrierten Oszillator des Filtermoduls ein elektrisches Taktsignal mit einer Referenzfrequenz erzeugt, wobei basierend auf dem Taktsignal das Filtermodul periodisch den variable Aktivierungsparameter bestimmen und/oder gegebenenfalls auf den entsprechenden inkrementierbaren Stack übertragen. Diese Ausführungsvariante hat u. a. den Vorteil, dass die einzelnen Module und Einheiten der technische Umsetzung des Luftfohrtsystems einfach synchronisiert und gegeneinander abgeglichen werden können.

An dieser Stelle soll festgehalten werden, dass sich die vorliegende Erfindung neben dem erfindungsgemässen Luftfahrtsystem mit Bodenstation auch auf ein entsprechendes Verfahren bezieht.

Nachfolgend werden Ausführungsvarianten der vorliegenden Erfindung anhand von Beispielen beschrieben. Die Beispiele der Ausführungen werden durch die folgenden beigelegten Figuren illustriert:

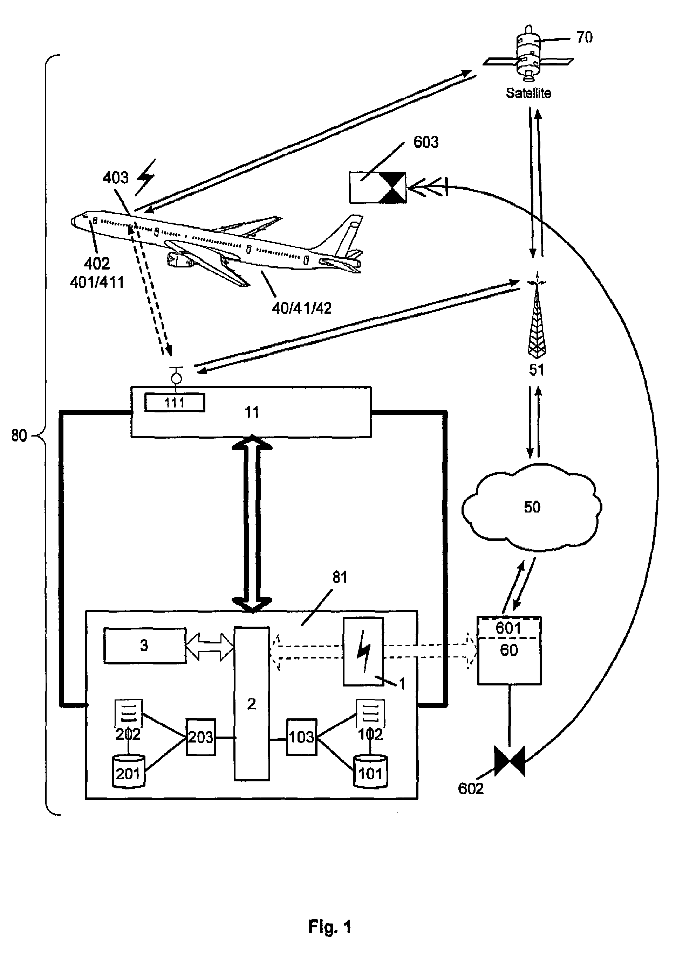

Figur 1 zeigt ein Blockdiagramm, welches schematisch ein Ausführungsbeispiel einer erfindungsgemässen avionischen Luftfahrtssystem 80 mit Bodenstation 81 zur automatischen Behebung von auftretenden Betriebsstörungen bei Flugzeugen 40/41/42 darstellt. Das avionische Luftfahrtsystem 80 ist mit einer Vielzahl von Flugzeugen 40/41 /42 über eine drahtloses Schnittstelle 403 der Avionik 402 verbunden. Mittels einer Schaltvorrichtung 1 der Bodenstation 81 werden dedizierte βetriebsstörungseinsatzvorrichtung 603 zur automatischen Betriebsstörungsbehebung aktiviert, falls eine mittels einer Sensorik 3/401/601 detektierte Betriebsstörung eintritt. Basierend auf den Logparameter, d.h. insbesondere der gemessenen Cycles verändert ein Filtermodul 2 die Steuerung der Schaltvorrichtung 1.

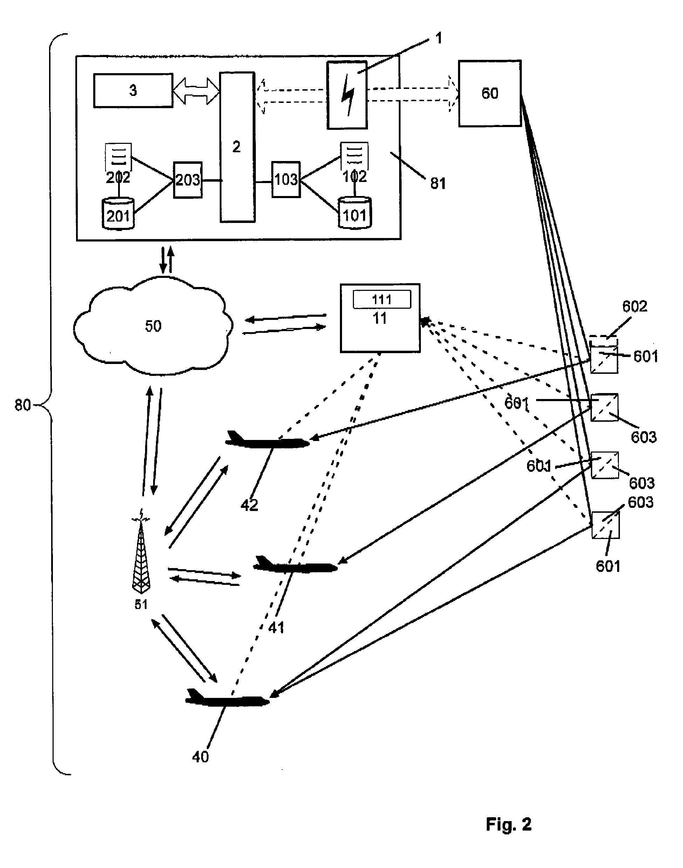

Figur 2 zeigt ebenfalls ein Blockdiagramm, welches schematisch ein Ausführungsbeispiel einer erfindungsgemässen avionischen Luftfahrtssystem 80 mit Bodenstation 81 zur automatischen Behebung von auftretenden Betriebsstörungen bei Flugzeugen 40/41/42 darstellt. Das avionische Luftfahrtsystem 80 ist mit einer Vielzahl von Flugzeugen 40/41/42 über eine drahtloses Schnittstelle 403 der Avionik 402 verbunden. Mittels einer Schaltvorrichtung 1 der Bodenstation 81 werden dedizierte Betriebsstörungseinsatzvorrichtung 603 zur automatischen Betriebsstörungsbehebung aktiviert, falls eine mittels einer Sensorik 3/401/601 detektierte Betriebsstörung eintritt.

Figuren 1 und 2 illustrieren eine Architektur, die zur Realisierung der Erfindung verwendet werden kann. In diesem Ausführungsbeispiel ist das avionisches Luftfahrtsystem 80 mit Bodenstation 81 zur automatischen Behebung von auftretenden Betriebsstörungen bei Flugzeugen 40/41/42 mit einer Vielzahl von Flugzeugen 40/41/42 über eine drahtloses Schnittstelle 403 der Avionik 402 der Flugzeuge 40,41,42 verbunden ist. Das Luftfahrtssystem 80 mit Bodenstation 81 kann z.B. als Teil eines technischen Systems eines Betreibers von Flugzeugen 40,...,42 sein, wie beispielsweise einer Fluggesellschaft oder Fluggüter-/Flugfrachttransportgesellschaft, aber auch eines Herstellers von Flugzeugen wie Airbus oder Boeing oder Flugüberwachungsdiensten. Die Flugzeuge können z.B. Flugzeuge zum Gütertransport 40/41 und/oder Personenbeförderung 42 und/oder Luftschiffe wie Zeppeline oder gar Shuttles oder andere Flugmittel zur Weltraumfahrt umfassen. Die Flugzeuge 40,...,42 können ebenfalls motorisierte und nicht motorisierte Flugmittel umfassen, insbesondere Segler, Motorsegler, Deltasegler u.ä.. Für ein bestimmtes Betriebsstörungsereignis werden dedizierte Betriebsstörungseinsatzvorrichtung 603 zur automatischen Betriebsstörungsbehebung mittels einer Schaltvorrichtung 1 der Bodenstation 81 aktiviert, falls eine mittels einer Sensorik 3/401/601 detektierte Betriebsstörung eintritt. Die Bodenstation 81 und/oder die Betriebsstörungseinsatzvomchtungen 603 können insbesondere teilweise z.B. automatisierte Notfall- und Alarmvorrichtungen mit geldwertbasierte Übertragungsmodule umfasst. Die Sensorik 3/401/601 kann z.B. mindestens teilweise zum Detektieren von Betriebsstörung in die Avionik 402 der Flugzeuge 40,...,42, die Steuervorrichtung der Betriebsstörungsbehebungsvorrichtungen 603 und/oder die Bodenstation 81 und/oder Landebasis 11 integriert sein. Bei den Betriebsstörungseinsatzvorrichtung 603 kann es sich z.B. um Kontroll-, Alarmvorrichtungen oder Systemen zur direkten technischen Intervention beim betroffenen Flugzeug 40,...,42, beim Betreiber des Flugzeuges 40,...,42 und/oder der Landebasis 11 und/oder der Bodenstation 81 handeln, welche beim Detektieren entsprechender Betriebsstörungen betroffen ist. Natürlich können auch mehrere Flugzeuge 40,...,42, Bodenstationen 81 und/oder Landebasen 11 gleichzeitig betroffen oder mittels des Luftfahrtssystems erfasst sein. Die Betriebsstörungsbehebung kann z.B. durch gekoppelte und/oder abgestufte technische Interventionen geschehen, wie z.B. Auslösen unterschiedlicher Kontrolldienste oder Drosselungs- und Dosierungsfilter bei entsprechenden Dosienrngsvorrichtungen oder Ventilen etc.. Ebenso sind Betriebsstörungsbehebungsvorrichtungen 603 möglich, welche z.B. durch das Flugfahrtsystem 80 aktiviert werden, beispielsweise im Sinne von automatisierten oder teilweise automatisierten Nottallinterventionen (oder deren Auslösung) von medizinisch geschultem Personal oder automatisiertes Auslösen von flugbedingten Notsituationen wie Krankentransporten etc., welche durch mittels dem Flugfahrtsystem 80 generierten, selektiv übermittelten Signaldaten alarmiert werden. Betriebsstörungsbehebungsvorrichtungen 603 können z.B. zur Steuerung der Vorrichtungen 603 mittels dem Luftfahrtssystem 80 zur automatisierten Behebung bei Betriebsstörungen mittels eines Interfaces uni- oder bidirektional mit den Flugzeug 40,...,42 und/oder der Bodenstation 81 und/oder der Landebasis 11 verbunden sein. Die Referenznummer 60 beschreibt die Interventionsvorrichtung als ganzes, umfassend das Kommunikationsinterface 601 mit evetuell Sensorik zru Messung von Betriebsstörungen, die Steuervorrichtung 602 zur elektronischen Überwachung und Steuerung der Betriebsstörungseinsatzvorrichtung 603 sowie die Betriebsstörungseinsatzvorrichtung 603

Mittels der Sensorik 3/401/601 wird eine auftretende Betriebsstörung detektiert und mittels des Filtermoduls 2 werden die Betriebsstörungseinsatzmittel 603 z.B. entsprechend der aufgetretenen Betriebsstörung und/oder dem betroffenen Flugzeugtyp 40,...,42 selektiert und mittels der Schaltvorrichtung 1 aktiviert. Das Luftfahrtsystem 80 umfasst in die Avionik 402 der Flugzeuge 40/41/42 Integrierte Detektionsvorrichtungen 411. Mittels der Detektionsvorrichtungen 411 werden durchgeführte Start- und/oder Landeeinheiten eines Flugzeuges 40/41/42 elektronisch erfasst, wobei entsprechende, dem Flugzeug 40,...,42 zugeordnete Logparameter der durchgeführten Start- und/oder Landeeinheiten von den Detektionsvorrichtungen 411 über die drahtlose Schnittstelle 403 auf die Bodenstation 81 übertragen werden. Die Logparameter können z.B. mindestens teilweise in Form von Betragswertparameter erfasst sein. Mittels der drahtlosen Schnittstelle 403 der Avionik 402 der Flugzeuge 40,...,42 können z.B. die zugeordneten Logparameter über ein sattelitengesfütztes Netzwerk 70 direkt auf die Bodenstation 81 übertragen werden. Die zugeordneten Logparameter können z.B. auch über ein drahltoses Kommunikationsnetzwerk 111 einer angeflogenen Landebasis 11 auf die Bodenstation 81 übertragen werden. Die Bodenstation 81 umfasst für jedes Flugzeug 40,...,42 ein inkrementierbarer Techlog-Stapelspelcher 202 mit auslesbarem Stapelspeicherhöhenwert. Der Techlog-Stapelspeicherhöhenwert wird mittels eines Zählermoduls 203 der Bodenstation 81 basierend auf gefilterten Start- und/oder Landeeinheiten der übertragenen Logparameter des jeweiligen Flugzeuges 40,...,42 erhöht. Das Zählermoduls 203 umfasst ebenfalls Mittel zum Auslesen des Techlog-Stapelspeicherhöhenwertes. Mittels eines Filtermoduls 2 der Bodenstation 81 wird ein Speicherschwellwert zur Freigabe der Aktivierung der Betriebsstörungseinsatzvorrichtung 603 dynamisch für ein bestimmtes Zeitfenster basierend auf dem Techlog-Stapelspeicherhöhenwerte bestimmt. Die Bodenstation 81 umfasst ein Aktivlerungsstapelspeicher 102 eines geschützten Speichermodul 103, mittels welchem von Aktivierungsparameter des Flugzeuges 40,...,42 erfasst werden. Die Aktivierungsparameter werden basierend auf dem aktuellen Speicher schwellwert auf die Bodenstation 81 übertragen und der Aktivlerungsstapelspeicher 102 wird entsprechend den übertragenen Aktivierungsparameter schrittweise inkrementiert. Die Aktivierungsparameter können als Speziallfall mindestens teilweise monetäre und/oder geldwertbasierte Betragswerte, insbesondere elektronisch geschützte Parameter umfassen. Als Ausführugnsvariante können z.B. mittels des Filtermoduls 2 der Bodenstation 81 erste Aktivierungsparameter dynamisch bestimmt werden und auf die Avionik (402) des Flugzeuges 40,...,42 und/oder auf ein dem jeweiligen Flugzeuge 40,...,42 zugeordneten Ergänzungsoffboardsystem 404 übertragen werden. Zur Inkrementierung des Aktivierungsstapeispeichers werden z.B. geschützte zweite Aktivierungsparameter von der Avionik 402 oder dem zugeordneten Ergänzungsoffboardsystem 404 generiert und auf die Bodenstation 81 übertragen. Die geschützten zweiten Aktivierungsparameter können z.B. eine eindeutig zuordenbare Identifikationsnummer umfassen. Mittels eines weiteren Zählermoduls 103 der Bodenstation 81 wird der Aktivierungsstapelspeicherhöhenwert des Aktivierungsstapelspeichers 102 kumuliert erfasst. Die Erfassung kann z.B. periodisch und/oder auf Request erfolgen und/oder bei Übermittlung erfolgen. Falls der dynamisch bestimmte Speicherschwellwert mit dem Aktivierungsstapelspeicherhöhenwert erreicht wird, wird mittels des Filtermoduls 2 die Schaltvorrichtung 1 zum dedizierten Aktivieren der Betriebsstörungseinsatzmittel 603 bei auftretenden Betriebsstörungen freigeschaltet.

Der variable Aktivierungsparameter oder Speicherschwellwert wird mittels des Filtermoduls 2 basierend auf den detektierten Anzahl Start- und/oder Landeeinheiten bzw. der Logparameter z.B. periodisch bestimmt und bei Rück-Übermittlung auf die Bodenstation 81 auf den Aktivierungsstapelspeicher 102 übertragbar ist. Das Filtermoduls 2 und/oder die Zählermodule 103/203 können einen integrierten Oszillator umfassen, mittels welches Oszillators ein elektrisches Taktsignal mit einer Referenzfrequenz erzeugbar ist, wobei basierend auf dem Taktsignal das Filtermodul 2 und/oder die Zählermodule 103/203 periodisch aktivierbar sind. Der variable Aktivierungsparameter und/oder Aktivierungsstapelspeicher kann z.B. mittels des Filtermoduls 2 basierend auf den detektierten Anzahl Start- und/oder Landeeinheiten dynamisch oder teilweise dynamisch bestimmt werden. Als Ausführungsvariante können z.B. bei Detektierten einer Betriebsstörung mittels der Sensorik 3/401/601 die Betriebsstörungseinsatzvorrichtungen 603 mittels des Filtermoduls 2 zusätzlich basierend auf dem Aktivierungsstapelspeicherhöhenwert selektiert und mittels der Schaltvorrichtung 1 aktiviert werden. Ebenso können die Logparameter z.B. zusätzlich Messwertparameter des Flight Management System (FMS) und/oder des Inertialnavigationsvorrichtung (INS) und/oder der Fly-By-Wire Sensoren und/oder Flugüberwachungsvorrichtungen des Flugzeuges 40,...,42 umfassen, wobei der Spelcherschwellwert mittels des Filtermoduls 2 dynamisch für das jeweilige Zeitfenster basierend auf dem Techlog-Stapelspeicherhöhenwert und den zusätzlichen Logparameter generiert wird. Die Avionik 402 des Flugzeuges 40,...,42 kann z.B. auch eine Höhenmesssensorik und/oder einen Fahrtenmesser und/oder einen Variometer und/oder einen Horizontkreisel und/oder einen Wendezeiger und/oder einen Beschleunigungsmesser und/oder eine Überziehwarnsensorik und/oder eine Aussentemperatursensorik und/oder eine Ortsbestimmungsvorrichtung umfassen. Das Ortsbestimmungsmodul der Detektionsvorrichtung 411 kann z.B. mindestens ein GPS-Modul zum Generieren von ortsabhängigen übermittelbaren Parametern umfassen. In den genannten Fällen umfassen die Logparameter zusätzlich Messparameter von mindestem einer der Sensoren, wobei der Speicherschwellwert mittels des Filtermoduls 2 dynamisch für das jeweilige Zeitfenster basierend auf dem Techlog-Stapelspeicherhöhenwert und den zusätzlichen Logparameter generiert wird. Weiter können mittels der Avionik 402 des Flugzeuges 40,...,42 oder den Kommunikationsmittel 111 der Landebasis 11 beispielsweise auch ATIS-Messparameter basierend auf dem Automatic Terminal Information Service (ATIS) der angeflogenen Landebasis 11 bei jeder Lande- und Starteinheit (Cycle) automatisch auf die Bodenstation 81 übertragen werden, wobei der Spelcherschwellwert dynamisch für das jeweilige Zeitfenster basierend auf dem Techlog-Stapelspeicherhöhenwert und den übertragenen ATIS-Messparameter generiert wird. Die Detektlonsvorrlchtung 411 umfasst wie erwähnt Messsensoren zum dynamisch oder teilweise dynamisch Detektieren von Start- und/oder Landeeinheiten umfasst. Die Detektionsvorrichtung 411 kann dazu wie für die Avionik 403 beschreiben z-B. eine Höhenmesssensorik und/oder einen Fahrtenmesser und/oder einen Variometer und/oder einen Horizontkreisel und/oder einen Wendezeiger und/oder einen Beschleunigungsmesser und/oder eine Überziehwarnsensorik und/oder eine Aussentemperatursensorik und/oder eine Ortsbestimmungsvorrichtung umfassen. Die Detektionsvorrichtung 411 kann z.B. auch Sensoren und/oder Detektionsmittel zum dynamischen Detektieren von iandbasisspezifischen Daten der zugeordneten Land-/Startbasis für Flugtransportmittel 40/41 und/oder Personenflugbeförderungsmittel 42 umfassen. Die zugeordneten Flugtransportmittel 40/41 und/oder Personenflugbeförderungsmittel 42 können z.B. die Detektlonsvorrlchtung 411 mit einer Schnittstelle zum Filtermoduls 2 und/oder zur Benutzervorrichtung 11 umfassen. Die genannte Schnittstelle von der Detektionsvorrrichtung 411 zum Filtermoduls 2 und/oder zur Benutzervorrichtung 11 kann z.B. eine Luftschnittstelle umfassen. Insbesondere kann die Detektionsvorrichtung 411 z.B. ein Ortsbestlmmungsmodul zum Generieren von ortsabhängigen übermittelbaren Parametern umfassen. Das Ortsbestimmungsmodul der Detektionsvorrichtung 411 kann z.B. mindestens ein GPS-Modul zum Generieren von ortsabhängigen übermittelbaren Parametern umfassen.

In einer Ausführungsvariante kann die Bodenstation 81 z.B. ein Interface zum Zugreifen auf eine oder mehrere Datenbanken mit landebasisspezifischen Datenrekords umfassen. Jede mittels der Detektionsvorrichtung 411 detektierte und als Logparameter erfasste Start- und/oder Landeeinheit (Cycle) wird mindestens einem landebasisspezifischen Datenrekord zugeordnet, wobei die Logparameter mittels eines Gewichtungsmodul basierend auf dem zugeordneten londebasisspezifischen Datenrekord gewichtet werden. Das Luftfahrtsystem 80 kann z.B. weiter Mittel zum dynamischen Aktualisieren der einen oder mehreren Datenbanken mit londebasisspezifischen Datenrekorde umfasst. Die Aktualisierung der landebasisspezifischen Datenrekorde kann beispielsweise periodisch und/oder auf Request realisiert sein. Die eine oder mehrere Datenbanken können z.B. dezentralisiert einer Landebasis 11 für Flugzeuge 40,...,42 zuordnet sein. Mittels eines Interfaces 111 können z.B. Daten von der Landebasis 11 unidirektional und/oder bidirektional zur Bodenstation 81 übertragen werden. Es ist natürlich auch möglich, dass die lande- und/oder starteinheitsspozifischen Datenrekorde und/oder Daten mittels Zugriff auf Datenbanken von staatlichen und/oder teilweise staatlichen und/oder privaten Kontrollstellen und/oder anderen Datenbanken von Start- und Landebasen erfasst werden. Die erfassten Daten können z.B. in einem Datenspeicher zugeordnet gespeichert werden und z.B. periodisch und/oder auf Request aktualisierbar sein. Durch diese Ausführungsvariante können unterschiedliche z.B. landesspezifische Bedingungen berücksichtigt werden, wie z.B. technische und wartungsmässige Unterschiede z.B. zwischen einem Flughafen wie Frankfurt, Hongkong (schwierige Landeverhältnisse) oder einem Flughafen in einem Entwicklungsland wie Angola oder Usbekistan (schlechte technische Vorrichtungen). Dies hat den Vorteil, dass Änderungen in den Start- und/oder Landebedingungen zB. durch technische Veränderungen bei den Basen unmittelbar erfasst werden und so das Luftfahrtssystem stets auf dem neusten Stand bleibt. Insbesondere wird so eine Automatisierung des Systems erreicht, welche auf andere Art so im Stand der Technik noch in keiner Weise erreicht worden ist. Das Luftfahrtsystem 80 kann zB. auch die genannten eine oder mehrere Datenbanken zugeordnet umfassen. In diesem Fall können zB. mittels geeigneter Filtermittel Daten, wie z.B. Metadaten, von erfassten Daten generiert werden und dynamisch aktualisiert werden. Dies erlaubt einen schnellen und einfachen Zugriff. Zudem kann das automatisierte Alarm- und Interventionssystem auch dann weiter funktionieren, wenn die Verbindungen zu Benutzervorrichtungen und/oder Erfassungseinheiten unterbrochen werden. Die Daten können, wie erwähnt, insbesondere auch Metadaten umfassen, die z.B. anhand einer inhaltsbasierenden Indexingtechnik extrahiert werden. Als Ausführungsbeispiel können die Metadaten mindestens teilweise dynamisch (in Real-Time) basierend auf den mittels der Detektionsvorrichtungen 411 übermittelten Logparametern erzeugt werden. Dies hat z.B. den Vorteil, dass die Metadaten immer die für das erfindungsgemässe System sinnvolle Aktualität und Genauigkeit besitzen. In einem speziellen Ausführungsbeispiel können die Betriebsstörungseinsatzvorrichtungen 603 zusätzlich geldwertbasierte Interventionsmittel zur monetären Deckung der Betriebsstörungsbehebung bei den Flugzeugen 40,...,42 umfassen. Für den Spezialfall dieser Betriebsstörungseinsatzvorrichtungen 603 sind die Aktivierungsparameter, d.h. die Fälle, in welchen mindestens eines der Betriebsstörungseinsatzvorrichtungen 603 aktiviert werden sollte, häufig gesetzlich länderspezifisch geregelt und umfassen private Systeme und/oder staatliche Systeme und/oder teilweise staatliche Systeme. Das avionische Luftfahrtssystem 80 kann wie erwähnt zugeordnet eine Vielzahl von Ladebasen 11 oder/oder Bodenstationen 81 mit Flugzeugen 40,...,42 umfassen. Die Flugzeuge 40,...,42 und/oder die Landebasis 11 können mit der Bodenstation 81 z.B. über das Kommunikationsnetzwerk 50/51 und/oder das Satellitenbasierte Netzwerk 70 unidirektional und/oder bidirektional verbunden sein. Das Kommunikationsnetz 50/51 und/oder das Satellitenbasierte Netzwerk 70 können beispielsweise ein GSM- oder ein UMTS-Netz, oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network) umfassen. Insbesondere umfasst es auch ISDN- und XDSL-Verbindungen. Bei unidirektionaler Verbindung kann das Kommunikationnetz 50/51/70 auch Broadcastsysteme (z.B. Digital Audio Broadcasting DAB oder Digital Video Broadcasting) umfassen, bei welchen Broadcastsender digitale Audio- respektive Video-Programme (Fernsehprogramme) und digitale Daten, beispielsweise Daten für die Ausführung von Datendiensten, programmbegleitende Daten (Programm Associated Data, PAD) an Broadcastempfänger unidirektional verbreiten. Dies kann Je nach Ausführungsvariante sinnvoll sein. Die unidirektionale Verbreitungseigenschaft dieser Broadcastsysteme kann jedoch u. a. den Nachteil haben, dass, insbesondere bei der Übertragung mittels Radiowellen, ein Rückkanal von den Broadcastempfängem zu den Broadcastsendern, respektive zu deren Betreibern, fehlt. Bedingt durch diesen fehlenden Rückkanal sind die Möglichkeiten für die Verschlüsselung, Datensicherheit, Verrechnung etc, von zugriffskontrollierten Programmen und/oder Daten beschränkter.

### Referenzliste

1 Schaltvorrichtung
2 Filtermoduls
3 Sensorik mit Gatewayinterface
11 Landebasis
   111 Kommunikationsmittel
40,...,42 Flugzeug
   401 Sensorik
   402 Avionik
   403 Drahtlose Kommunikationsmittel
   404 Ergänzungsoffboardsystem
   411 Detektionsvorrichtung für Start- und/oder Landeeinheiten
50/51 Kommunikationsnetzwerk
60 Interventionsvorrichtung
   601 Sensorik/Interface
   602 Steuervorrichtung
   603 Betriebsstörungseinsatzvorrichtung
70 Satellitengestütztes Netzwerk
80 Avionisches Luftfahrtsystem
81 Bodenstation
101 Geschütztes erstes Speichermodul
102 Aktivierungsstapelspeicher
103 Zählermodul
201 Geschütztes zweites Speichermodul
202 Techlog-Stapelspeicher
203 Zählermodul

## Patentansprüche

1. Avionisches Luftfahrtsystem (80) mit Bodenstation (81) zur automatischen Behebung von auftretenden Betriebsstörungen bei Flugzeugen (40/41/42), wobei das avionische Luftfahrtsystem (80) mit einer Vielzahl von Flugzeugen (40/41/42) Ober eine drahtloses Schnittstelle (403) der Avionik (402) verbunden ist, und wobei dedizierte Betriebsstörungseinsatzvorrichtung (603) zur automatischen Betriebsstörungsbehebung mittels einer Schaltvorrichtung (1) der Bodenstation (81) aktivierbar sind, falls eine mittels einer Sensorik (3/401/601) detektierte Betriebsstörung eintritt, **dadurch gekennzeichnet.**
**dass** das Luftfahrtsystem (80) in die Avionik (402) der Flugzeuge (40/41/42) integrierte Detektionsvorrichtungen (411) zum elektronischen Erfassen durchgeführter Start- und/oder Landeeinheiten eines Flugzeuges (40/41 /42) umfasst, wobei dem Flugzeug (40,...,42) zugeordnete Logparameter der durchgeführten Start- und/oder Landeeinheiten von den Detekitonsvorttchtungen (411) über die drahtlose Schnittstelle (403) auf die Bodenstation (81) übertragbar sind,
**dass** die Bodenstation (81) für jedes Flugzeug (40,...,42) ein inkrementierbarer Techlog-Stapelspeicher (202) mit auslesbarem Stapelspeicherhöhenwert umfasst, wobei der Techlog-Stapelspeicherhöhenwert mittels eines Zählermoduls (203) basierend auf gefilterten Start- und/oder Landeeinheiten der übertragenen Logparameter des jeweiligen Flugzeuges (40,...,42) erhöhbar ist,
**dass** das Zählermoduls (203) Mittel zum Auslesen des Techlog-Stapelspeicherhöhenwertes und die Bodenstation (81) ein Filtermodul (2) umfasst, mittels welchem Filtermodul (2) dynamisch für ein bestimmtes Zeitfenster ein Speicher schwellwert zur Freigabe der Aktivierung der Betriebsstörungselnsatzvorrlchtung (603) basierend auf dem Techlog-Stapelspeicherhöhenwerte bestimmbar ist,
**dass** die Bodenstation (81) ein Aktivierungsstapelspeicher (102) eines geschützten Speichermodul (103) zum Erfassen von Aktivierungsparameter des Flugzeuges (40,...,42) umfasst, wobei die Aktivierungsparameter basierend auf dem aktuellen Speicherschwellwert auf die Bodenstation (81) übertragbar sind und der Aktivierungsstapelspeicher (102) entsprechend den übertragenen Aktivierungsparameter schrittweise inkrementierbar ist, und
**dass** mittels eines Zählermoduls (103) der Bodenstation (81) einen Aktivierungsstapelspeicherhöhenwert des Aktivierungsstapelspeichers (102) kumuliert erfassbar ist und, falls der dynamisch bestimmte Speicherschwellwert mit dem Aktivierungsstapelspeicherhöhenwert erreicht wird, mittels der Filtermoduls (2) die Schaltvorrichtung (1) zum dedizierten Aktivieren der Betriebsstörungseinsatzmittel (603) bei auftretenden Betriebsstörungen freischaltbar ist.

2. Avionisches Luftfahrtsystem (80) mit Bodenstation (81) nach Anspruch 1, **dadurch gekennzeichnet, dass** bei Detektieren einer Betriebsstörung mittels der Sensorik (3/401/601) die Betriebsstörungseinsatzmittel (603) mittels des Filtermoduls entsprechend der aufgetretenen Betriebsstörung und/oder dem betroffenen Flugzeugtyp (40,...,42) selektierbar und mittels der Schaltvorrichtung (1) aktivierbar sind.

3. Avionisches Luftfahrtsystem (80) mit Bodenstation (81) nach Anspruch 2, **dadurch gekennzeichnet, dass** bei Detektierten einer Betriebsstörung mittels der Sensorik (3/401/601) die Betriebsstörungseinsatzvorrichtungen (603) mittels des Filtermoduls (2) zusätzlich basierend auf dem Aktivierungsstopelspeicherhöhenwert selektierbar und mittels der Schaltvorrichtung (1) aktivierbar sind.

4. Avionisches Luftfahrtsystem (80) mit Bodenstation (81) nach einem der Ansprüche 1 bis 3, **dadurch gekennzeichnet, dass** die Logparameter zusätzlich Messwertparameter des Flight Management System (FMS) und/oder des Inertialnavigationsvorrichtung (INS) und/oder der Fly-By-Wire Sensoren und/oder Flugüberwachungsvorrichtungen des Flugzeuges (40,...,42) umfassen, wobei der Speicherschwellwert mittels des Filtermoduls (2) dynamisch für das jeweilige Zeitfenster basierend auf dem Techlog-Stapelspeicherhöhenwert und den zusätzlichen Logparameter generiert ist.

5. Avionisches Luftfahrtsystem (80) mit Bodenstation (81) nach Anspruch 4, **dadurch gekennzeichnet, dass** die Avionik (402) des Flugzeuges (40,...,42) eine Höhenmesssensorik und/oder einen Fahrtenmesser und/oder einen Variometer und/oder einen Horizontkreisel und/oder einen Wendezeiger und/oder einen Beschleunigungsmesser und/oder eine Überriehwarnsensorik und/oder eine Aussentemperatursensorik und/oder eine Ortsbestimmungsvorrichtung umfasst, wobei die Logparameter zusätzlich Messparameter mindestens eines der Sensoren umfassen und wobei der Speicherschwellwert mittels des Filtermoduls (2) dynamisch für das jeweilige Zeitfenster basierend auf dem Techlog-Stapelspeicherhöhenwert und den zusätzlichen Logparameter generiert ist.

6. Avionisches Luftfahrtsystem (80) mit Bodenstation (81) nach einem der Ansprüche 1 bis 5, **dadurch gekennzeichnet, dass** mittels der Avionik (402) des Flugzeuges (40,...,42) oder den Kommunikationsmittel (111) der Landebasis (11) ATIS-Messparameter basierend auf dem Automatic Terminal Information Service (ATIS) der angeflogenen Landebasis (11) bei jeder Lande- und Starteinheit automatisch auf die Bodenstation (81) übertragbar sind, wobei der Speicherschwellwert dynamisch für das jeweilige Zeitfenster basierend auf dem Techlog-Stapelspeicherhöhenwert und den übertragenen ATIS-Messparameter generiert ist.

7. Avionisches Luftfahrtsystem (80) mit Bodenstation (81) nach einem der Ansprüche 1 bis 6, **dadurch gekennzeichnet, dass** mittels des Filtermoduls (2) der Bodenstation (81) dynamisch bestimmte erste Aktivierungsparameter auf die Avionik (402) des Flugzeuges (40,...,42) und/oder auf ein dem jeweiligen Flugzeuge (40,...,42) zugeordneten Ergänzungsbordsystem (404) übertragbar sind, und zur Inkrementierung des Aktivierungsstapelspeichers geschützte zweite Aktivierungsparameter von der Avionik (402) oder dem zugeordneten Ergänzungsbordsystem (404) generierbar und auf die Bodenstation (81) übertragbar sind.

8. Avionisches Luftfahrtsystem (80) mit Bodenstation (81) nach Anspruch 7, **dadurch gekennzeichnet, dass** die geschützten zweiten Aktivierungsparameter eine eindeutig zuordenbare Identifikationsnummer umfassen.

9. Avionisches Luftfahrtsystem (80) mit Bodenstation (81) nach einem der Ansprüche 1 bis 8, **dadurch gekennzeichnet, dass** mittels der drahtlosen Schnittstelle (403) der Avionik (402) der Flugzeuge (40,...,42) die zugeordneten Logparameter über ein sattelltenbasiertes Netzwerk (70) direkt auf die Bodenstation (81) übertragbar sind.

10. Avionisches Luftfahrtsystem (80) mit Bodenstation (81) nach einem der Ansprüche 1 bis 8, **dadurch gekennzeichnet, dass** mittels der drahtlosen Schnittstelle (403) der Avionik (402) der Flugzeuge (40,...,42) die zugeordneten Logparameter über ein drahitoses Kommunikationsnetzwerk (111) einer angeflogenen Landebasis (11) auf die Bodenstation (81) übertragbar sind.

11. Avionisches Luftfahrtsystem (80) mit Bodenstation (81) nach einem der Ansprüche 1 bis 10, **dadurch gekennzeichnet, dass** die Bodenstation (81) ein Interface zum Zugreifen auf eine oder mehrere Datenbanken mit landebasisspezifischen Datenrekords umfasst, wobei jede mittels der Detektionsvorrichtung (411) detektierte und als Logparameter erfasste Start- und/oder Landeeinheit mindestens einem landebasisspezifischen Datenrekord zuordenbar ist und die Logparameter mittels eines Gewichtungsmodul basierend auf dem zugeordneten landebasisspezifischen Datenrekord gewichtbar ist.

12. Avionisches Luftfahrtsystem (80) mit Bodenstation (81) nach Anspruch 11, **dadurch gekennzeichnet, dass** das Luftfahrtsystem (80) Mittel zum dynamischen Aktualisieren der einen oder mehreren Datenbanken mit landebasisspeifischen Datenrekorde umfasst, wobei die Aktualisierung der landebasisspezifischen Datenrekorde periodisch und/oder auf Request realisiert ist.

13. Avionisches Luftfahrtsystem (80) mit Bodenstation (81) nach einem der Ansprüche 11 oder 12, **dadurch gekennzeichnet, dass** die eine oder mehrere Datenbanken dezentralisiert einer Landebasis (11) für Flugzeuge (40,...,42) zugeordnet ist, wobei mittels eines Interfaces (111) Daten unidirektional und/oder bidirektional von der Landebaisis (11) zur Bodenstation (81) übertragbar sind.

14. Avionisches Luftfahrtsverfahren (80) mit Bodenstation (81) zur automatischen Behebung von auftretenden Betriebsstörungen bei Flugzeugen (40/41/42), wobei das avionische Luftfahrtsystem (80) mit einer Vielzahl der Flugzeuge (40/41/42) über eine drahtloses Schnittstelle (403) der Avionik (402) verbunden ist, und wobei dedizierte Betriebsstörungseinsatzvorrichtung (603) zur automatischen Betriebsstörungsbehebung mittels einer Schaltvorrichtung (1) der Bodenstation (81) aktiviert werden, falls eine mittels einer Sensorik (3/401/601) detektierte Betriebsstörung eintritt, **dadurch gekennzeichnet,**
**dass** mittels integrierte Detektionsvorrichtungen (411) der Avionik (402) eines Flugzeuges (40/41/42) durchgeführte Start- und/oder Landeeinheiten des Flugzeuges (40/41/42) elektronisch erfasst werden, wobei dem Flugzeug (40,...,42) zugeordnete Logparameter der durchgeführten Start- und/oder Landeeinheiten von den Detektionsvorrichtungen (411) über die drahtlose Schnittstelle (403) auf die Bodenstation (81) übertragen werden,
**dass** mittels eines Zählermoduls (203) der Bodenstation (81) ein Techlog-Stapelspeicherhöhenwert eines inkrementierbaren Techlog-Stapelspelchers (202) basierend auf gefilterten Start- und/oder Landeeinheiten der übertragenen Logparameter des jeweiligen Flugzeuges (40,...,42) erhöht wird,
**dass** mittels des Zählermoduls (203) der Techlog-Stapelspeicherhöhenwertes ausgelesen wird, wobei mittels eines Filtermoduls (2) der Bodenstation (81) dynamisch ein Speicherschwellwert zur Freigabe der Aktivierung der Betriebsstörungseinsatzvorrichtung (603) basierend auf dem Techlog-Stapelspeicherhöhenwerte für ein bestimmtes Zeitfenster bestimmt wird,
**dass** mittels eines Aktivierungsstapelspeicher (102) eines geschützten Speichermodul (103) der Bodenstation (81) auf die Bodenstation (81) übertragene Aktivierungsparameter des Flugzeuges (40,...,42) erfasst werden, wobei die Aktivierungsparameter auf die Bodenstation (81) basierend auf dem aktuellen Speicherschwellwert übertragen werden und der Aktivierungsstapelspeicher (102) entsprechend den über tragenen Aktivierungsparameter schrittweise Inkrementiert wird, und
**dass** mittels eines Zählermoduls (103) der Bodenstation (80) einen Aktivierungsstapelspeicherhöhenwert des Aktivierungsstapelspeichers (102) kumuliert erfasst wird und, falls der dynamisch bestimmte Speicherschwellwert mit dem Aktivierungsstapelspeicherhöhenwert erreicht wird, mittels des Filtermoduls (2) die Schaltvorrichtung (1) zum dedizierten Aktivieren von Betriebsstörungseinsatzmittel (603) bei auftretenden Betriebsstörungen freigeschaltet wird.

15. Avionisches Luftfahrtsverfahren (80) mit Bodenstation (81) nach Anspruch 14, **dadurch gekennzeichnet, dass** bei Detektieren einer Betriebsstörung mittels der Sensorik (3/401/601) die Betriebsstörungseinsatzmittel (603) mittels des Filtermoduls entsprechend der aufgetretenen Betriebsstörung und/oder dem betroffenen Flugzeugtyp (40,...,42) selektiert und mittels der Schaltvorrichtung (1) aktiviert werden.

16. Avionisches Luftfahrtsverfahren (80) mit Bodenstation (81) nach Anspruch 15, **dadurch gekennzeichnet, dass** bei Detektierten einer Betriebsstörung mittels der Sensorik (3/401/601) die Betriebsstörungseinsatzvorrichtungen (603) mittels des Filtermoduls (2) zusätzlich basierend auf dem Aktivierungsstapelspeicherhöhenwert selektiert und mittels der Schaltvorrichtung (1) aktiviert werden.

17. Avionisches Luftfahrtsverfahren (80) mit Bodenstation (81) nach einem der Ansprüche 14 bis 16, **dadurch gekennzeichnet, dass** die Logparameter zusätzlich Messwertparameter des Flight Management System (FMS) und/oder des Inertialnavigationsvorrichtung (INS) und/oder der Fly-By-Wire Sensoren und/oder Flugüberwachungsvorrichtungen umfassen, wobei der Speicherschwellwert mittels des Filtermoduls (2) dynamisch für das jeweilige Zeitfenster basierend auf dem Techlog-Stapelspeicherhöhenwert und den zusätzlichen Logparameter generiert wird.

18. Avionisches Luftfahrtsverfahren (80) mit Bodenstation (81) nach Anspruch 17, **dadurch gekennzeichnet, dass** die Avionik (402) des Flugzeuges (40,...,42) eine Höhenmesssensorik und/oder einen Fahrtenmesser und/oder einen Variometer und/oder einen Horizontkreisel und/oder einen Wendezeiger und/oder einen Beschleunigungsmesser und/oder eine Überziehwarnsensorik und/oder eine Aussentemperatursensorik und/oder eine Ortsbestimmungsvorrichtung umfasst, wobei die Logparameter zusätzlich Messparameter mindestens eines der Sensoren umfassen und wobei der Speicherschweilwert dynamisch mittels des Filtermoduls (2) für das jeweilige Zeitfenster basierend auf dem Techlog-Stapelspetcherhöhenwert und den zusätztichen Logparameter entsprechend generiert wird.

19. Avionisches Luftfahrtsverfahren (80) mit Bodenstation (81) nach einem der Ansprüche 14 bis 18, **dadurch gekennzeichnet, dass** mittels der Avionik (402) des Flugzeuges (40,...,42) oder den Kommunikationsmittel (111) der Landebasis (11) ATIS-Messparameter basierend auf dem Automatic Terminal Information Service (ATIS) der angeflogenen Landebasis (11) bei jeder Lande- und Starteinheit automatisch auf die Bodenstation (81) übertragen werden, wobei mittels des Filtermoduls (2) der Speicherschwellwert dynamisch für das jeweilige Zeitfenster basierend auf dem Techlog-Stapelspeicherhöhenwert und den übertragenen ATIS-Messparameter generiert wird.

20. Avionisches Luftfahrtsverfahren (80) mit Bodenstation (81) nach einem der Ansprüche 14 bis 19, **dadurch gekennzeichnet, dass** mittels des Filtermoduls (2) der Bodenstation (81) dynamisch bestimmte erste Aktivierungsparameter auf die Avionik (402) des Flugzeuges (40,...,42) und/oder auf ein dem jeweiligen Flugzeuge (40,...,42) zugeordneten Ergänzungsbordsystem (404) übertragen werden, und zur inkrementierung des Akllvierungsstapelspeichers geschützte zweite Aktivierungsparameter von der Avionik (402) oder dem zugeordneten Ergänzungsbordsystem (404) generiert und auf die Bodenstation (81) übertragen werden.

21. Avionisches Luftfahrtsverfahren (80) mit Bodenstation (81) nach Anspruch 20, **dadurch gekennzeichnet, dass** die geschützten zweiten Aktivierungsparameter eine eindeutig zuordenbare ldentifikationsnummer umfassen.

22. Avionisches Luftfahrtsverfahren (80) mit Bodenstation (81) nach einem der Ansprüche 14 bis 21, **dadurch gekennzeichnet, dass** mittels der drahtlosen Schnittstelle (403) der Avionik (402) der Flugzeuge (40,...,42) die zugeordneten Logparameter über ein sattelitenbasiertes Netzwerk (70) direkt auf die Bodenstation (81) übertragen werden.

23. Avianisches Luftfahrtsverfahren (80) mit Bodenstation (81) nach einem der Ansprüche 14 bis 22, **dadurch gekennzeichnet, dass** mittels der drahtlosen Schnittstelle (403) der Avionik (402) der Flugzeuge (40,...,42) die zugeordneten Logparameter über ein drahltoses Kommunikationsnetzwerk (111) einer angeflogenen Landebasis (11) auf die Bodenstation (8l) übertragen werden.

24. Avionisches Luftfahrtsverfahren (80) mit Bodenstation (81) nach einem der Ansprüche 14 bis 23, **dadurch gekennzeichnet, dass** mittels eines Interface der Bodenstation (81) auf eine oder mehrere Datenbanken mit landebasisspezifischen Datenrekords zugegriffen wird, wobei jede mittels der Detektionsvorrichtung (411) detektierte und als Logparameter erfasste Start- und/oder Landeeinheit mindestens einem landebasisspezifischen Datenrekord zugeordnet wird und die Logparameter mittels eines Gewichtungsmodul basierend auf dem zugeordneten landebasisspezifischen Datenrekord gewichtet werden.

25. Avionisches Luftfahrtsverfahren (80) mit Bodenstation (81) nach Anspruch 24, **dadurch gekennzeichnet, dass** mittels des Luftfahrtsystem (80) die eine oder mehrere Datenbanken mit landebasisspezifischen Datenrekorde dynamisch aktualisert werden, wobei die landebasisspezifischen Datenrekorde periodisch und/oder auf Request aktualisiert werden.

26. Avionisches Luftfahrtsverfahren (80) mit Bodenstation (81) nach einem der Ansprüche 24 oder 25, **dadurch gekennzeichnet, dass** die eine oder mehrere Datenbanken dezentralisiert einer Landebasis (11) für Flugzeuge (40,...,42) zugeordnet wird, wobei mittels eines Interfaces (111) der Landebasis (11) Daten unidirektional und/oder bidirektional von der Landebasis (11) zur Bodenstation (81) übertragen werden.
